# EUROPÄISCHE PATENTANMELDUNG

(11) **EP 1 333 303 A1**
(43) Veröffentlichungstag der Anmeldung: **06.08.2003**
(21) Anmeldenummer: 03450019.9
(22) Anmeldetag: 21.01.2003
(51) Int. Cl.: G02B 6/44

(54) **Spleisskassettensystem**

(30) Priorität: 31.01.2002 AT 1572002
(71) Anmelder: Moeller Gebäudeautomation KG, 3943 Schrems (AT)
(72) Erfinder: Bogg, Walter, 3942 Hirschbach (AT)
(74) Vertreter: Gibler, Ferdinand, Dipl.-Ing. Dr. techn.

(57) **Zusammenfassung**

Spleißkassette für ein Spleißablagesystem mit einer Vielzahl an Spleißkassetten, welche eine Hauptkassette zur Ablage von zumindest einer optischen Faser und/oder einem Verbindungsspleiß umfaßt, wobei in oder an der Hauptkassette (2) wenigstens eine Zusatzkassette (3) zur Ablage von zumindest einer weiteren optischen Faser und/oder einem weiteren Verbindungsspleiß anordenbar ist.

## Beschreibung

Die Erfindung betrifft eine Spleißkassette für ein Spleißablagesystem mit einer Vielzahl an Spleißkassetten, welche eine Hauptkassette zur Ablage von zumindest einer optischen Faser und/oder einem Verbindungsspleiß umfaßt.

Optische Fasern werden an ihren Verbindungsstellen in Spleißkassetten abgelegt. Gängige Spleißkassetten sind für die Ablage aller Verbindungsspleiße einer Bündelader vorgesehen.

Weiters sind Spleißkassetten bekannt, in die üblicherweise nur die optische Fasern eines Kreises, also zwei optische Fasern und/oder Verbindungsspleiße abgelegt werden. Dadurch kann einerseits die Ablage der Verbindungsspleiße unabhängig vom Kabelaufbau bzw. der Netzstruktur erfolgen und andererseits werden bei späteren Umbauarbeiten die optischen Fasern, die sich in Betrieb befinden nicht gestört. Nachteilig an diesen Spleißkassetten ist, daß eine hohe Anzahl an Spleißkassetten benötigt wird.

Bei Spleißablagesystemen können sowohl Spleißkassetten für alle Verbindungsspleiße einer Bündelader als auch Spleißkassetten für jeweils einen Kreis verwendet werden. Weisen alle Spleißkassetten die gleichen Außenabmessungen auf, so weist dieses Spleißablagesystem den Nachteil auf, daß die Spleißkassetten für jeweils einen Kreis eine nur geringe Packungsdichte haben. Aufgrund der vorgegebenen maximalen Anzahl an Spleißkassetten kann nur eine begrenzte Anzahl an optischen Fasern abgelegt werden.

Bei anderen bekannten Spleißablagesystemen weisen die Spleißkassetten für jeweils einen Kreis eine geringere Bauhöhe als die Spleißkassetten für alle Verbindungsspleiße einer Bündelader auf, wodurch die Packungsdichte des Systems erhöht wird. Nachteilig an diesen Spleißablagesystemen ist, daß die Spleißkassetten aufgrund ihrer unterschiedlichen Außenabmessungen nicht untereinander vertauschbar sind. Zumeist sind die Spleißkassetten an einer Anreihvorrichtung od. dgl. befestigbar, wobei aufgrund der Rasterung der Anreihvorrichtung die Anordnung der Spleißkassetten für alle Verbindungsspleiße einer Bündelader und der Spleißkassetten für jeweils einen Kreis vorgegeben ist. Daher weisen diese Spleißablagesysteme eine nur geringe Flexibilität bezüglich der Anordnung der unterschiedlichen Spleißkassetten auf. Dies wirkt sich insbesondere bei Umbauarbeiten bestehender Spleißablagesysteme nachteilig aus.

Aufgabe der Erfindung ist es, eine Spleißkassette der eingangs genannten Art anzugeben, die die oben angeführten Nachteile vermeidet, das Ablegen von Verbindungsspleißen unabhängig vom Kabelaufbau bzw. der Netzstruktur ermöglicht und bei der bei späteren Umbauarbeiten die sich in Betrieb befindlichen Fasern nicht gestört werden.

Erfindungsgemäß wird dies dadurch erreicht, daß in oder an der Hauptkassette wenigstens eine Zusatzkassette zur Ablage von zumindest einer weiteren optischen Faser und/oder einem weiteren Verbindungsspleiß anordenbar ist.

Dadurch ergibt sich der Vorteil, daß die erfindungsgmäße Spleißkassette auch bei der Ablage von nur einem Kreis in der Hauptkassette und der wenigstens einen Zusatzkassette eine hohe Packungsdichte aufweist. Dadurch kann ein Spleißablagesystem gebildet werden, bei dem die Spleißkassetten für alle Verbindungsspleiße einer Bündelader als auch Spleißkassetten für jeweils einen Kreis im wesentlichen die selben Außenabmessungen aufweisen und vertauschbar sind, wobei eine hohe Anzahl an optischen Fasern im Spleißablagesystem abgelegt werden kann.

In Weiterbildung der Erfindung kann vorgesehen sein, daß die Zusatzkassette mittels einer Schwenkeinrichtung mit der Hauptkassette verbindbar ist. Durch die Schwenkeinrichtung können durch die Zusatzkassette verdeckte Bereiche der Hauptkassette einfach und schnell durch ein Verschwenken der Zusatzkassette zugänglich gemacht werden.

In diesem Zusammenhang kann in Weiterführung der Erfindung vorgesehen sein, daß die Schwenkeinrichtung in einer hochgeschwenkten Lage der Zusatzkassette fixierbar, insbesondere einrastbar, ist. Dadurch können die optischen Fasern, die in der Hauptkassette abgelegt sind, manipuliert werden, ohne daß die Zusatzkassette gehalten werden muß.

Gemäß einer anderen Ausführungsform der Erfindung kann vorgesehen sein, daß die Zusatzkassette lösbar mit der Hauptkassette verbindbar ist. Diese Ausführung ermöglicht es, die erfindungsgemäße Spleißkassette auch als gängige Spleißkassette für einen Kreis zu verwenden, wobei die Zusatzkassette nur bei Bedarf eingesetzt wird. Dadurch kann ein Spleißablagesystem kostengünstig hergestellt werden.

In Weiterführung der Erfindung kann vorgesehen sein, daß die Hauptkassette eine Vorrichtung zur drehbaren Befestigung der Hauptkassette an einer weiteren Spleißkassette, einer Anreihvorrichtung od. dgl. aufweist. Auf diese Weise kann der Zugang zu einer erfindungsgemäßen Spleißkassette in einem Stapel von Spleißkassetten auf einfache Weise gewährleistet werden.

Gemäß einer weiteren Ausgestaltung der Erfindung kann vorgesehen sein, daß die Schwenkachse der Schwenkeinrichtung im wesentlichen parallel zur Drehachse der Vorrichtung zur drehbaren Befestigung ist, wodurch die Bewegung der Zusatzkassette und der Hauptkassette in analoger Weise erfolgen kann.

In Weiterführung der Erfindung kann vorgesehen sein, daß die Schwenkachse der Schwenkeinrichtung im wesentlichen senkrecht zur Drehachse der Vorrichtung zur drehbaren Befestigung ist. Dadurch können die Schwenkeinrichtungen mehrerer Zusatzkassetten auf einfache Weise räumlich getrennt angeordnet werden.

Eine andere mögliche Ausführungsform der Erfindung kann darin bestehen, daß die Hauptkassette einen Innenbereich zur Aufnahme der Zusatzkassette aufweist, wobei der Innenbereich eine niedrigere Bauhöhe als der den Innenbereich umgebende Außenbereich aufweist. Aufgrund dieser Ausführungsform können die Hauptkassette und die Zusatzkassette bereichsweise annähernd gleich aufgebaut sein.

Gemäß einer weiteren Ausführungsform der Erfindung kann vorgesehen sein, daß die Hauptkassette und die Zusatzkassette Führungen zur Krümmungsbegrenzung der optischen Fasern aufweisen, wodurch eine Beschädigung der optischen Fasern bei der Manipulation der erfindungsgemäßen Spleißkassette weitestgehend ausgeschlossen werden kann.

In Weiterführung der Erfindung kann vorgesehen sein, daß die Zusatzkassette Eingänge und/oder Ausgänge aufweist, wobei zumindest einer der Eingänge und/oder Ausgänge im wesentlichen mit der Schwenkachse der Schwenkeinrichtung fluchtend angeordnet ist, und daß die Hauptkassette zumindest eine Übergangsöffnung aufweist, welche - im eingebauten Zustand der Zusatzkassette - dem zumindest einem der Eingänge und/oder Ausgänge, welcher im wesentlichen mit der Schwenkachse der Schwenkeinrichtung fluchtend angeordnet ist, gegenüberliegend angeordnet ist. Diese Ausführungsform gewährleistet, daß die optischen Fasern, die in der Zusatzkassette abgelegt sind, bei einer Verschwenkung der Zusatzkassette nicht beschädigt werden.

Gemäß einer anderen Ausgestaltung der Erfindung kann vorgesehen sein, daß die Hauptkassette und die Zusatzkassette jeweils Ablageräume für Überlängen der optischen Fasern aufweisen, wodurch die Flexibilität des Einsatzes der erfindungsgemäßen Spleißkassetten verbessert werden kann.

Gemäß einer Weiterführung der Erfindung kann vorgesehen sein, daß die Hauptkassette und die Zusatzkassette jeweils Einrichtungen zum Festlegen von zumindest einem Verbindungsspleiß aufweist. Auf diese Weise können Verbindungsspleiße so abgelegt werden, daß sie vor Beschädigungen weitestgehend geschützt sind.

In diesem Zusammenhang kann in Weiterbildung der Erfindung vorgesehen sein, daß die Einrichtungen zum Festlegen für jeweils zumindest vier, insbesondere für sechs, Verbindungsspleiße ausgebildet sind. Werden in einer Kassette zwei Spleiße abgelegt, so können aufgrund dieser Ausführung auch die Spleiße einer weiteren Abzweigung in dieser Kassette abgelegt werden.

In weiterer Ausgestaltung der Erfindung kann vorgesehen sein, daß die Hauptkassette und die Zusatzkassette jeweils Haltevorrichtungen für die optischen Fasern aufweisen. Die Haltevorrichtungen verhindern ein Herausfallen der optischen Fasern bei der Manipulation der erfindungsgemäßen Spleißkassette.

Gemäß einer anderen Ausführungsform der Erfindung kann vorgesehen sein, daß eine Abdeckung vorgesehen ist, welche mit der Hauptkassette und/oder der Zusatzkassette verbindbar ist. Durch die Abdeckung können die optischen Fasern in der erfindungsgemäßen Spleißkassette vor Umgebungseinflüssen geschützt werden.

Eine andere mögliche Ausgestaltung der Erfindung kann darin bestehen, daß wenigstens zwei Zusatzkassetten mit der Hauptkassette verbindbar sind. Durch die Ausführung mit mehreren Zusatzkassetten kann die Packungsdichte der erfindungsgemäßen Spleißkassette weiter gesteigert werden.

Die Erfindung betrifft weiters ein Fasermanagementsystem zur Ablage von optischen Fasern, erste Spleißkassetten zur Ablage von zumindest einer optischen Faser und/oder einem Verbindungsspleiß und zweite Spleißkassetten zur Ablage aller Verbindungsspleiße einer Bündelader umfassend.

Aufgabe der Erfindung ist es ein Fasermanagementsystem der oben genannten Art anzugeben, das eine große Flexibilität der Anordnung der Spleißkassetten und eine große Anzahl ablegbarer optischer Fasern sicherstellt. Eine weitere Aufgabe der Erfindung ist es, daß bei einem Umbau des Fasermanagementsystems die Anordnung der ersten und der zweiten Spleißkassetten geändert werden kann.

Erfindungsgemäß wird dies dadurch erreicht, daß wenigstens eine der ersten Spleißkassetten die Merkmale zumindest eines der Ansprüche 1 bis 16 aufweist.

Dadurch ergibt sich der Vorteil, daß neben einer hohen Flexibilität des erfindungsgemäßen Fasermanagementsystems auch eine hohe Packungsdichte der optischen Fasern erreicht werden kann.

In weiterer Ausgestaltung der Erfindung kann vorgesehen sein, daß die ersten Spleißkassetten und die zweiten Spleißkassetten im wesentlichen die gleiche Bauhöhe aufweisen.

Durch die im wesentlichen gleiche Bauhöhe wird die gegenseitige Austauschbarkeit der ersten und der zweiten Spleißkassette verbessert.

Gemäß einer weiteren Ausführungsform der Erfindung kann vorgesehen sein, daß die ersten Spleißkassetten und die zweiten Spleißkassetten im wesentlichen die gleiche Außenkontur aufweisen. Dadurch kann ein einheitliches Erscheinungsbild des erfindungsgemäßen Fasermanagementsystems erreicht werden.

In Weiterbildung der Erfindung kann vorgesehen sein, daß wenigstens eine Vorrichtung zum Stapeln und/oder zum schwenkbaren Festlegen der ersten Spleißkassetten und der zweiten Spleißkassetten, insbesondere eine Anreihvorrichtung, vorgesehen ist. In den Vorrichtungen können die Spleißkassetten auf einfache Weise zusammengefaßt werden.

Gemäß einer anderen Ausgestaltung der Erfindung kann vorgesehen sein, daß die ersten Spleißkassetten und die zweiten Spleißkassetten jeweils eine Vorrichtung zur drehbaren Befestigung aufweisen, und daß die Vorrichtung zur drehbaren Befestigung der ersten Spleißkassetten im wesentlichen gleich ausgebildet ist wie die Vorrichtung zur drehbaren Befestigung der zweiten Spleißkassetten. Dadurch kann ein Austausch einer ersten Spleißkassette und einer zweiten Spleißkassette besonders einfach durchgeführt werden.

Gemäß einer weiteren Ausführungsform der Erfindung kann vorgesehen sein, daß die ersten Spleißkassetten und die zweiten Spleißkassetten jeweils Eingänge und/oder Ausgänge aufweisen, und daß die Eingänge und/oder die Ausgänge der ersten Spleißkassetten gleich angeordnet sind wie die Eingänge und/oder die Ausgänge der zweiten Spleißkassetten. Dadurch können optische Fasern nach einem Wechsel der Art der Spleißkassetten auf einfache Weise in die neuen Spleißkassetten geführt werden.

In weiterer Ausgestaltung der Erfindung kann vorgesehen sein, daß eine Abdeckung vorgesehen ist, die wahlweise mit den ersten Spleißkassetten oder den zweiten Spleißkassetten verbindbar ist. Dadurch kann die erforderliche Anzahl der benötigten Teile zum Aufbau des erfindungsgemäßen Fasermanagementsystems reduziert werden.

Die Erfindung wird unter Bezugnahme auf die beigeschlossenen Zeichnungen, in welchen Ausführungsformen dargestellt sind, näher beschrieben. Dabei zeigt:
Fig. 1 eine erfindungsgemäße Spleißkassette mit einer Hauptkassette und einer Zusatzkassette;
Fig. 2 die Hauptkassette gemäß Fig. 1;
Fig. 3 die Zusatzkassette gemäß Fig. 1;
Fig. 4 die Spleißkassette gemäß Fig. 1 mit aufgeschwenkter Zusatzkassette;
Fig. 5 die Spleißkassette nach Fig. 4 von schräg hinten;
Fig. 6 eine zweite Spleißkassette zur Ablage aller Verbindungsspleiße einer Bündelader;
Fig. 7 ein erfindungsgemäßes Fasermanagementsystem mit ersten Spleißkassetten und zweiten Spleißkassetten;
Fig. 8 eine andere Ausführungsform der erfindungsgemäßen Spleißkassette mit zwei Zusatzkassetten; und
Fig. 9 eine weitere Ausführungsform der erfindungsgemäßen Spleißkassette mit zwei Zusatzkassetten.

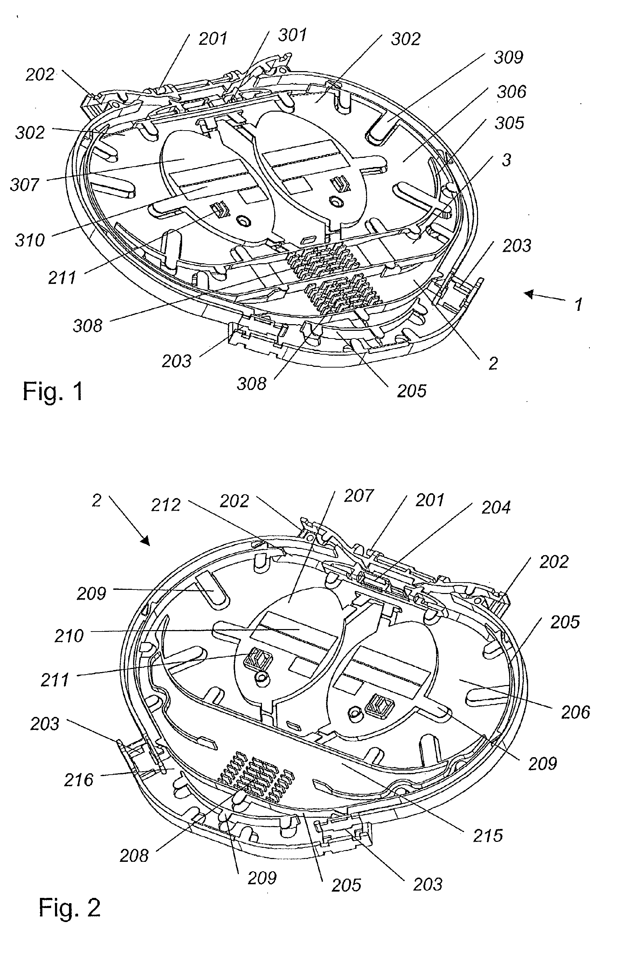

In Fig. 1 ist eine Ausführungsform einer erfindungsgemäßen Spleißkassette 1 für ein Spleißablagesystem mit einer Vielzahl an Spleißkassetten 1, 4, welche eine Hauptkassette 2 zur Ablage von zumindest einer optischen Faser und/oder einem Verbindungsspleiß umfaßt. In der Hauptkassette 2 ist wenigstens eine Zusatzkassette 3 anordenbar, in der zumindest eine weitere optische Faser und/oder ein Verbindungsspleiß ablegbar ist. Die Zusatzkassette 3 kann auch an der Hauptkassette 2 anordenbar sein. Durch die getrennte Ablegung der optischen Fasern und/oder der Verbindungsspleiße ist es möglich, daß einzelne optische Fasern bei einem späteren Umbau des Spleißablagesystems manipuliert werden können, wobei eine Beeinflussung der in Betrieb stehenden optischen Fasern weitgehend ausgeschlossen ist und das Spleißablagesystem eine hohe Betriebssicherheit aufweist.

Als günstig hat es sich erwiesen, wenn die Zusatzkassette 3 lösbar mit der Hauptkassette 2 verbindbar ist. In diesem Fall kann die Hauptkassette 2 auch alleine verwendet werden, wobei die Zusatzkassette 3 erst bei Bedarf mit der Hauptkassette 2 verbunden wird. Dadurch kann eine besonders hohe Flexibilität des Einsatzes der erfindungsgemäßen Spleißkassette 1 erreicht werden. Da es nicht erforderlich ist, die Zusatzkassette 3 in ein Spleißablagesystem zu integrieren, falls diese nicht benötigt wird, können die Materialkosten gering gehalten werden. Durch die Verwendung der Hauptkassette 2 und der Zusatzkassette 3 wird eine hohe Packungsdichte von optischen Fasern bei gleichzeitiger Trennung der einzelnen Kreise erreicht, sodaß bei einem späteren Umbau die in Betrieb befindlichen optischen Fasern nicht beeinträchtigt werden.

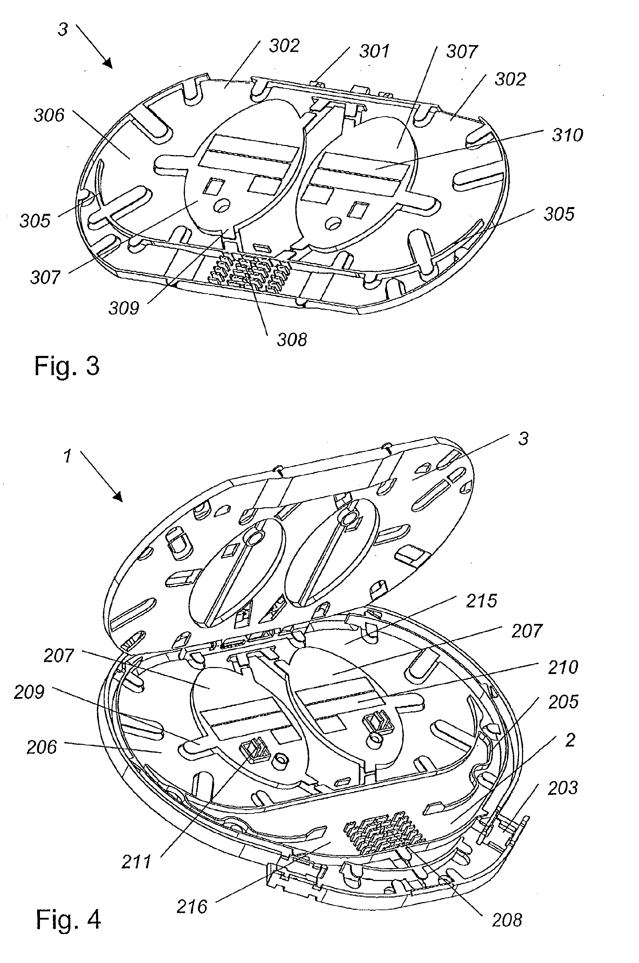

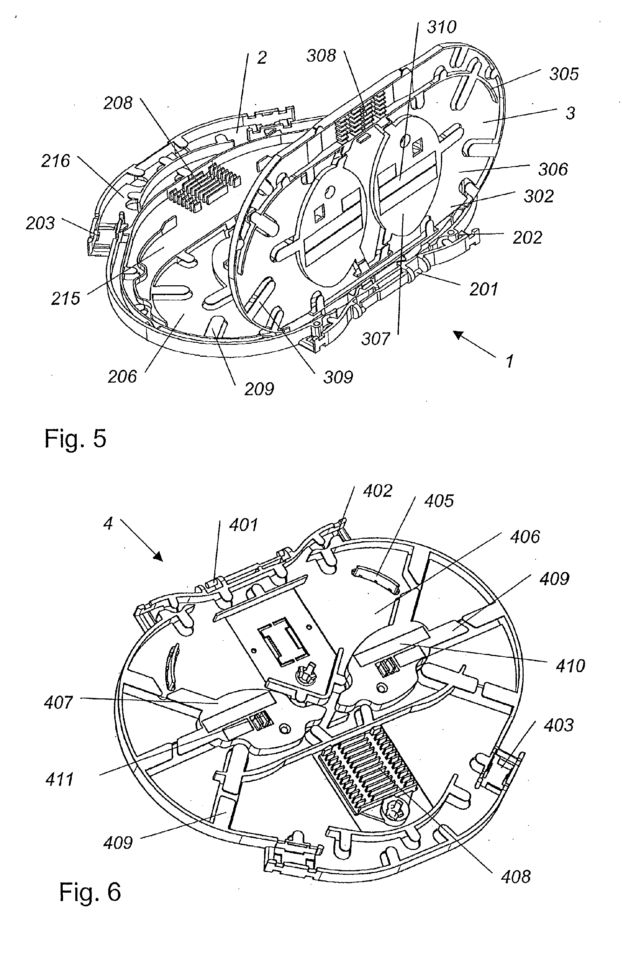

Die Verbindung zwischen der Zusatzkassette 3 und der Hauptkassette 2 kann durch eine Schwenkeinrichtung 301 ausgebildet werden, sodaß man durch Hochschwenken der Zusatzkassette 3 einen einfachen Zugang zur Hauptkassette erhält. Dabei kann vorgesehen sein, daß die Schwenkeinrichtung 301 im hochgeschwenkten Zustand der Zusatzkassette 3 fixierbar, insbesondere einrastbar, ist, sodaß die hochgeschwenkte Zusatzkassette 3 nicht gehalten werden muß. Der hochgeschwenkte und eingerastete Zustand der Zusatzkassette 3 ist in den Fig. 4 und 5 dargestellt.

Die erfindungsgemäße Spleißkassette 1 kann weiters Befestigungseinrichtungen 211 für eine Abdeckung od. dgl. enthalten, sodaß die in der erfindungsgemäßen Spleißkassette 1 abgelegten optischen Fasern und/oder Verbindungsspleiße weitgehend geschützt sind. Dabei kann vorgesehen sein, daß sowohl für die Hauptkassette 2, als auch für die Zusatzkassette 3 eine eigene Abdeckung vorgesehen ist. Es kann aber auch eine Abdeckung für die gesamte erfindungsgemäße Spleißkassette 1 vorgesehen sein, wobei die Befestigungseinrichtungen 211 an der Hauptkassette 2 und/oder an der Zusatzkassette 3 angebracht sein können.

Fig. 2 zeigt die Hauptkassette 2 der erfindungsgemäßen Spleißkassette nach Fig. 1. Diese weist ein Vorrichtung zur drehbaren Befestigung 201 der Hauptkassette 2 und damit der gesamten erfindungsgemäßen Spleißkassette 1 an einer weiteren Spleißkassette 1, 4, einer Anreihvorrichtung 5 od. dgl. auf. Anstelle einer Vorrichtung zur drehbaren Befestigung 201 kann bei anderen Spleißablagesystemen auch eine Vorrichtung zur translatorischen Befestigung der Hauptkassette 2 vorgesehen sein.

Die Hauptkassette 2 weist für die Aufnahme der wenigstens einen Zusatzkassette 3 einen Innenbereich 215 auf, welcher eine niedrigere Bauhöhe als der den Innenbereich 215 umgebende Außenbereich 216 der Hauptkassette aufweist. Dadurch ist im Innenbereich 215 der benötigte Raum für die Aufnahme der Zusatzkassette 3 vorhanden. Bei anderen erfindungsgemäßen Spleißkassetten 1 können die jeweiligen Bauhöhen der Hauptkassette 2 und der Zusatzkassette 3 auch niedriger als die Bauhöhe der erfindungsgemäßen Spleißkassette 1 sein.

Für die Verbindung mit der Zusatzkassette 3 weist die Hauptkassette 3 eine Aufnahmevorrichtung 204 auf, welche einen Teil der Schwenkeinrichtung 301 bildet.

Zur Führung der optischen Fasern weist die Hauptkassette 2 Führungen zur Krümmungsbegrenzung 205 auf. Diese sind insbesondere durch Wände und Trommeln 207 gebildet. Um die Trommeln 207 sind Ablageräume 206 für Überlängen der optischen Fasern ausgebildet. Die Führungen zur Krümmungsbegerenzung 205 stellen sicher, daß ein vorgebbarer minimaler Biegeradius der optischen Fasern in der Hauptkassette 2 nicht unterschritten wird.

Weiters sind in der Hauptkassette 2 Einrichtungen zum Festlegen 208 von zumindest einem Verbindungsspleiß vorgesehen. In einer Ausführungsform der erfindungsgemäßen Spleißkassette 1 können Vorrichtungen zum Festlegen 208 von zumindest vier Verbindungsspleißen in der Hauptkassette 2 vorgesehen sein. Die in Fig. 2 dargestellte Hauptkassette 2 weist Vorrichtungen zum Festlegen 208 von sechs Verbindungsspleißen in der Hauptkassette 2 auf.

Um eine sichere Führung der optischen Fasern in der Hauptkassette 2 auch bei einer Bewegung der erfindungsgemäßen Spleißkassette 1 zu gewährleisten, weist die Hauptkassette 2 eine Vielzahl an Haltevorrichtungen 209 für optische Fasern auf.

Weiters kann die Hauptkassette 2 zumindest ein Beschriftungsfeld 210 od. dgl. aufweisen, wodurch die Zuordnung der abgelegten optischen Fasern erleichtert wird.

Der Übergang der optischen Fasern von der Hauptkassette 2 in die Zusatzkassette 3 erfolgt über die Übergangsöffnung 212.

In Fig. 3 ist die Zusatzkassette 3 der erfindungsgemäßen Spleißkassette 1 nach Fig. 1 dargestellt.

Die Zusatzkassette 3 weist Eingänge und/oder Ausgänge 302 auf, welche im wesentlichen mit der Schwenkachse der Schwenkeinrichtung 301 fluchtend angeordnet sind. Dadurch kann die Zusatzkassette 3 ohne Störungen der in der Zusatzkassette 3 abgelegten optischen Fasern verschwenkt werden. Im eingebauten Zustand der Zusatzkassette 3 sind die Übergangsöffnungen 212 der Hauptkassette 2 den Eingängen und/oder Ausgängen 302 der Zusatzkassette 3 gegenüberliegend angeordnet. In anderen Ausführungsformen der Zusatzkassette 3 können auch weitere Eingänge und/oder Ausgänge 203 vorgesehen sein, welche nicht im wesentlichen fluchtend mit der Schwenkachse der Schwenkeinrichtung 301 angeordnet sind.

Zur Führung der optischen Fasern weist die Zusatzkassette 3 Führungen zur Krümmungsbegrenzung 305 auf. Diese sind insbesondere durch Wände und Trommeln 307 gebildet. Um die Trommeln 307 sind Ablageräume 306 für Überlängen der optischen Fasern ausgebildet.

Weiters sind in der Zusatzkassette 3 Einrichtungen zum Festlegen 308 von zumindest einem Verbindungsspleiß vorgesehen. In einer Ausführungsform der erfindungsgemäßen Spleißkassette 1 können Vorrichtungen zum Festlegen 308 von zumindest vier Verbindungsspleißen in der Zusatzkassette 3 vorgesehen sein. Die in Fig. 3 dargestellte Zusatzkassette 3 weist Vorrichtungen zum Festlegen 308 von sechs Verbindungsspleißen in der Zusatzkassette 3 auf.

Um eine sichere Führung der optischen Fasern in der Zusatzkassette 3 auch bei einer Bewegung der erfindungsgemäßen Spleißkassette 1 zu gewährleisten, weist die Zusatzkassette 3 eine Vielzahl an Haltevorrichtungen 309 für optische Fasern auf.

Weiters kann die Zusatzkassette 3 zumindest ein Beschriftungsfeld 310 od. dgl. aufweisen, wodurch die Zuordnung der abgelegten optischen Fasern erleichtert wird.

In den Fig. 4 und 5 ist die erfindungsgemäße Spleißkassette 1 von zwei unterschiedlichen Richtungen dargestellt, wobei die Zusatzkassette 3 hochgeschwenkt ist. Es hat sich als günstig erwiesen, wenn die Zusatzkassette 3 in dieser Position fixierbar ist. Dadurch können optische Fasern leicht in der Hauptkassette 2 abgelegt oder manipuliert werden.

Fig. 6 zeigt eine Ausführungsform einer zweiten Spleißkassette 4 zur Ablage aller Verbindungsspleiße einer Bündelader.

Die zweite Spleißkassette 4 weist eine Vorrichtung zur drehbaren Befestigung 401 an einer weiteren Spleißkassette 1, 4 , einer Anreihvorrichtung 5 od. dgl. auf, wobei die Vorrichtung zur drehbaren Befestigung 401 analog der Vorrichtung der erfindungsgmäßen Spleißkassette 1 ausgebildet sein kann.

Zur Führung der optischen Fasern weist die zweite Spleißkassette 4 Führungen zur Krümmungsbegrenzung 405 auf. Diese sind insbesondere durch Wände und Trommeln 407 gebildet. Um die Trommeln 407 sind Ablageräume 406 für Überlängen der optischen Fasern ausgebildet.

Weiters sind in der zweiten Spleißkassette 4 Einrichtungen zum Festlegen 408 von zumindest einem Verbindungsspleiß vorgesehen. In einer Ausführungsform der zweiten Spleißkassette 4 können Vorrichtungen zum Festlegen 408 von zumindest sechs, zwölf, achtzehn oder vierundzwanzig Verbindungsspleißen in der zweiten Spleißkassette 4 vorgesehen sein. Die in Fig. 6 dargestellte zweite Spleißkassette 4 weist Vorrichtungen zum Festlegen 408 von zwölf Verbindungsspleißen in der zweiten Spleißkassette 4 auf.

Um eine sichere Führung der optischen Fasern in der zweiten Spleißkassette 4 auch bei einer Bewegung der zweiten Spleißkassette 4 zu gewährleisten, weist die zweite Spleißkassette 4 eine Vielzahl an Haltevorrichtungen 409 für optische Fasern auf.

Weiters kann die zweite Spleißkassette 4 zumindest ein Beschriftungsfeld 410 od. dgl. aufweisen, wodurch die Zuordnung der abgelegten optischen Fasern erleichtert wird.

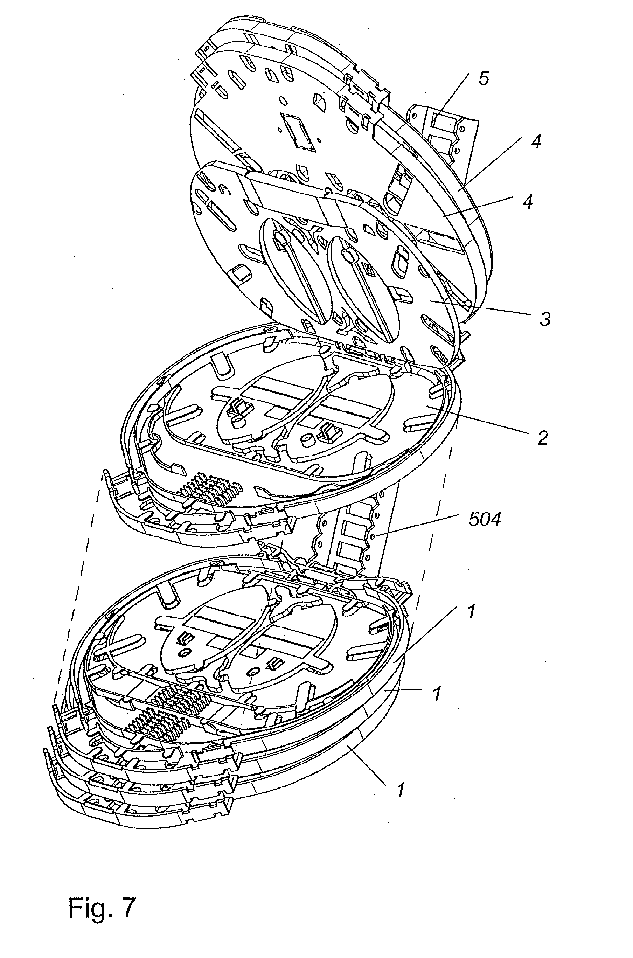

In Fig. 7 ist eine Ausführungsform eines erfindungsgemäßen Fasermanagementsystems, welches ein flexibles Spleißablagesystem ist, dargestellt, welches erste Spleißkassetten 1 zur Ablage von zumindest einer optischen Faser und/oder einem Verbindungsspleiß und zweite Spleißkassetten 4 zur Ablage aller Verbindungsspleiße einer Bündelader. Dabei entsprechen die ersten Spleißkassetten den erfindungsgemäßen Spleißkassetten 1. Neben der ersten Spleißkassette 1 und der zweiten Spleißkassette 4 kann das erfindungsgemäße Fasermanagementsystem auch noch weitere Spleißkassetten umfassen. Bei dem erfindungsgemäßen Fasermanagementsystem wird aufgrund der unterschiedlichen Spleißkassetten 1, 4 eine hohe Flexibilität erreicht, wobei es nicht wesentlich ist, daß in einer Ausführungsform des erfindungsgemäßen Fasermanagementsystems unterschiedliche Spleißkassetten 1, 4 tatsächlich verwendet werden.

Bei der gezeigten Ausführungsform des erfindungsgemäßen Fasermanagementsystems weisen die erste Spleißkassette 1 und die zweite Spleißkassette 4 im wesentlichen die gleiche Bauhöhe und die gleiche Befestigungsvorrichtung 201, 401 auf. Dadurch können die ersten Spleißkassetten 1 und die zweiten Spleißkassetten 4 wahlweise in Aufnahmevorrichtungen 504 der Anreihvorrichtung gebracht werden und auch nachträglich durch eine unterschiedliche Spleißkassette 1, 4 ausgetauscht werden, wodurch eine hohe Flexibilität des erfindungsgemäßen Fasermanagementsystems erreicht wird. Anstelle der Anreihvorrichtung 5 kann auch eine Vorrichtung zum Stapeln und/oder zum schwenkbaren Festlegen der Spleißkassetten 1, 4 vorgesehen sein.

Ein einheitliches Erscheinungsbild des erfindungsgemäßen Fasermanagementsystems kann erreicht werden, wenn die erste Spleißkassette 1 und die zweite Spleißkassette 4 im wesentlichen die gleiche Außenkontur aufweisen. Weiters kann die Austauschbarkeit der Spleißkassetten 1, 4 verbessert werden, wenn ihre Eingänge und/oder Ausgänge 202, 203, 402, 403 gleich angeordnet sind. Es hat sich als günstig erwiesen, wenn die Spleißkassetten 1, 4 Eingänge und/oder Ausgänge 202, 402 aufweisen, die im wesentlichen mit der Drehachse der Vorrichtung zur drehbaren Befestigung 201, 401 fluchtend angeordnet sind, wodurch abgelegte optische Fasern durch Drehen der Spleißkassetten 1, 4 nicht beeinträchtigt werden.

Es können aber auch weitere Eingänge und/oder Ausgänge 203, 403 vorgesehen sein.

Weiters können die erste Spleißkassette 1 und die zweite Spleißkassette 4 Befestigungseinrichtungen 211, 411 für eine Abdeckung od. dgl. aufweisen, sodaß dieselbe Abdeckung wahlweise mit der ersten Spleißkassette 1 oder der zweiten Spleißkassette 4 verbindbar ist.

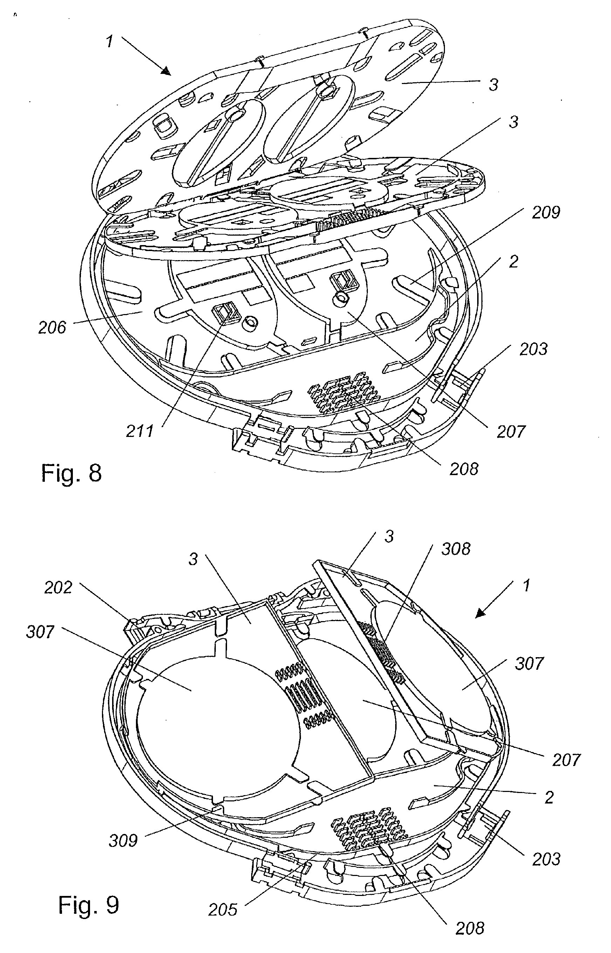

Die Fig. 8 und 9 zeigen weitere Ausführungsformen einer erfindungsgemäßen Spleißkassette 1, wobei diese neben der Hauptkassette 2 jeweils zwei Zusatzkassetten 3 umfassen. In anderen Ausführungsformen kann auch eine andere Anzahl an Zusatzkassetten 3 vorgesehen sein.

Bei der erfindungsgemäßen Spleißkassette 1 nach Fig. 8 sind die Schwenkachsen der Schwenkeinrichtungen 301 im wesentlichen parallel zur Drehachse der Vorrichtung zur drehbaren Befestigung.

Bei der erfindungsgemäßen Spleißkassette 1 nach Fig. 9 sind die Schwenkachsen der Schwenkeinrichtungen 301 im wesentlichen senkrecht zur Drehachse der Vorrichtung zur drehbaren Befestigung.

## Patentansprüche

1. Spleißkassette für ein Spleißablagesystem mit einer Vielzahl an Spleißkassetten, welche eine Hauptkassette zur Ablage von zumindest einer optischen Faser und/oder einem Verbindungsspleiß umfaßt, **dadurch gekennzeichnet, daß** in oder an der Hauptkassette (2) wenigstens eine Zusatzkassette (3) zur Ablage von zumindest einer weiteren optischen Faser und/oder einem weiteren Verbindungsspleiß anordenbar ist.

2. Spleißkassette nach Anspruch 1, **dadurch gekennzeichnet, daß** die Zusatzkassette (3) mittels einer Schwenkeinrichtung (301) mit der Hauptkassette (2) verbindbar ist.

3. Spleißkassette nach Anspruch 2, **dadurch gekennzeichnet, daß** die Schwenkeinrichtung (301) in einer hochgeschwenkten Lage der Zusatzkassette (3) fixierbar, insbesondere einrastbar, ist.

4. Spleißkassette nach einem der Ansprüche 1, 2 oder 3, **dadurch gekennzeichnet, daß** die Zusatzkassette (3) lösbar mit der Hauptkassette (2) verbindbar ist.

5. Spleißkassette nach einem der Ansprüche 1 bis 4, **dadurch gekennzeichnet, daß** die Hauptkassette (2) eine Vorrichtung zur drehbaren Befestigung (201) der Hauptkassette (2) an einer weiteren Spleißkassette (1,4), einer Anreihvorrichtung (5) od. dgl. aufweist.

6. Spleißkassette nach Anspruch 5, **dadurch gekennzeichnet, daß** die Schwenkachse der Schwenkeinrichtung (301) im wesentlichen parallel zur Drehachse der Vorrichtung zur drehbaren Befestigung (201) ist.

7. Spleißkassette nach Anspruch 5, **dadurch gekennzeichnet, daß** die Schwenkachse der Schwenkeinrichtung (301) im wesentlichen senkrecht zur Drehachse der Vorrichtung zur drehbaren Befestigung (201) ist.

8. Spleißkassette nach einem der Ansprüche 1 bis 7, **dadurch gekennzeichnet, daß** die Hauptkassette (2) einen Innenbereich (215) zur Aufnahme der Zusatzkassette (3) aufweist, wobei der Innenbereich (215) eine niedrigere Bauhöhe als der den Innenbereich (215) umgebende Außenbereich (216) aufweist.

9. Spleißkassette nach einem der Ansprüche 1 bis 8, **dadurch gekennzeichnet, daß** die Hauptkassette (2) und die Zusatzkassette (3) Führungen zur Krümmungsbegrenzung (205, 305) der optischen Fasern aufweisen.

10. Spleißkassette nach einem der Ansprüche 1 bis 9, **dadurch gekennzeichnet, daß** die Zusatzkassette (3) Eingänge und/oder Ausgänge (302) aufweist, wobei zumindest einer der Eingänge und/oder Ausgänge (302) im wesentlichen mit der Schwenkachse der Schwenkeinrichtung (301) fluchtend angeordnet ist, und daß die Hauptkassette (2) zumindest eine Übergangsöffnung (212) aufweist, welche - im eingebauten Zustand der Zusatzkassette - dem zumindest einem der Eingänge und/oder Ausgänge (302), welcher im wesentlichen mit der Schwenkachse der Schwenkeinrichtung (301) fluchtend angeordnet ist, gegenüberliegend angeordnet ist.

11. Spleißkassette nach einem der Ansprüche 1 bis 10, **dadurch gekennzeichnet, daß** die Hauptkassette (2) und die Zusatzkassette (3) jeweils Ablageräume (206, 306) für Überlängen der optischen Fasern aufweisen.

12. Spleißkassette nach einem der Ansprüche 1 bis 11, **dadurch gekennzeichnet, daß** die Hauptkassette (2) und die Zusatzkassette (3) jeweils Einrichtungen zum Festlegen (208, 308) von zumindest einem Verbindungsspleiß aufweist.

13. Spleißkassette nach Anspruch 12, **dadurch gekennzeichnet, daß** die Einrichtungen zum Festlegen (208, 308) für jeweils zumindest vier, insbesondere für sechs, Verbindungsspleiße ausgebildet sind.

14. Spleißkassette nach einem der Ansprüche 1 bis 13, **dadurch gekennzeichnet, daß** die Hauptkassette (2) und die Zusatzkassette (3) jeweils Haltevorrichtungen (209, 309) für die optischen Fasern aufweisen.

15. Spleißkassette nach einem der Ansprüche 1 bis 14, **dadurch gekennzeichnet, daß** eine Abdeckung vorgesehen ist, welche mit der Hauptkassette (2) und/oder der Zusatzkassette (3) verbindbar ist.

16. Spleißkassette nach einem der Ansprüche 1 bis 15, **dadurch gekennzeichnet, daß** wenigstens zwei Zusatzkassetten (2) mit der Hauptkassette (3) verbindbar sind.

17. Fasermanagementsystem zur Ablage von optischen Fasern, erste Spleißkassetten zur Ablage von zumindest einer optischen Faser und/oder einem Verbindungsspleiß und zweite Spleißkassetten zur Ablage aller Verbindungsspleiße einer Bündelader umfassend, **dadurch gekennzeichnet, daß** wenigstens eine der ersten Spleißkassetten (1) die Merkmale zumindest eines der Ansprüche 1 bis 16 aufweist.

18. Fasermanagementsystem nach Anspruch 17, **dadurch gekennzeichnet, daß** die ersten Spleißkassetten (1) und die zweiten Spleißkassetten (4) im wesentlichen die gleiche Bauhöhe aufweisen.

19. Fasermanagementsystem nach Anspruch 17 oder 18, **dadurch gekennzeichnet, daß** die ersten Spleißkassetten (1) und die zweiten Spleißkassetten (4) im wesentlichen die gleiche Außenkontur aufweisen.

20. Fasermanagementsystem nach einem der Ansprüche 17 bis 19, **dadurch gekennzeichnet, daß** wenigstens eine Vorrichtung zum Stapeln und/oder zum schwenkbaren Festlegen der ersten Spleißkassetten (1) und der zweiten Spleißkassetten (4), insbesondere eine Anreihvorrichtung (5), vorgesehen ist.

21. Fasermanagementsystem nach einem der Ansprüche 17 bis 20, **dadurch gekennzeichnet, daß** die ersten Spleißkassetten (1) und die zweiten Spleißkassetten (4) jeweils eine Vorrichtung zur drehbaren Befestigung (201, 401) aufweisen, und daß die Vorrichtung zur drehbaren Befestigung (201) der ersten Spleißkassetten (1) im wesentlichen gleich ausgebildet ist wie die Vorrichtung zur drehbaren Befestigung (401) der zweiten Spleißkassetten (4).

22. Fasermanagementsystem nach einem der Ansprüche 17 bis 21, **dadurch gekennzeichnet, daß** die ersten Spleißkassetten (1) und die zweiten Spleißkassetten (4) jeweils Eingänge und/oder Ausgänge (202, 203, 402 403) aufweisen, und daß die Eingänge und/oder die Ausgänge (202, 203) der ersten Spleißkassetten (1) gleich angeordnet sind wie die Eingänge und/oder die Ausgänge (402, 403) der zweiten Spleißkassetten (4).

23. Fasermanagementsystem nach einem der Ansprüche 17 bis 22, **dadurch gekennzeichnet, daß** eine Abdeckung vorgesehen ist, die wahlweise mit den ersten Spleißkassetten (1) oder den zweiten Spleißkassetten (4) verbindbar ist.
